(19) Europäisches Patentamt

European Patent Office

Office européen des brevets

(11) **EP 1 418 507 A2**

(12) **EUROPEAN PATENT APPLICATION**

(43) Date of publication:
**12.05.2004 Bulletin 2004/20**

(51) Int Cl.[7]: **G06F 17/18**, G06F 17/30

(21) Application number: **03078299.9**

(22) Date of filing: **20.10.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **31.10.2002 US 285171**

(71) Applicant: **EASTMAN KODAK COMPANY**
**Rochester, New York 14650 (US)**

(72) Inventor: **Sun, Zhaohui**
**c/o Eastman Kodak Company, P.L.S.**
**Rochester, New York 14650-2201 (US)**

(74) Representative: **Haile, Helen Cynthia et al**
**Kodak Limited**
**Patent, W92-3A,**
**Headstone Drive**
**Harrow, Middlesex HA1 4TY (GB)**

(54) **Method and system for multiple cue integration**

(57)     A method for multiple cue integration based on a plurality of objects comprises the steps of: (a) deriving an ideal transition graph and ideal transition probability matrix from examples with known membership from the plurality of objects; (b) deriving a relationship of the plurality of objects as distance graphs and distance matrices based on a plurality of object cues; (c) integrating the distance graphs and distance matrices as a single transition probability graph and transition matrix by exponential decay; and (d) optimizing the integration of the distance graphs and distance matrices in step(c) by minimizing a distance between the ideal transition probability matrix and the transition matrix derived from cue integration in step (c), wherein the integration implicitly captures prior knowledge of cue expressiveness and effectiveness.

FIG. 2

**Description**

The invention relates generally to the field of pattern classification of a plurality of objects, and in particular to model adaptation using multiple cues.

The problem of classifying a plurality of unsorted objects into coherent clusters has long been studied. The task is to classify the unsorted objects into groups (clusters) following certain criteria. One of the criteria is minimization of the intra-cluster distance (the distance between the objects in the same cluster) and maximization of the inter-cluster distance (the distance between objects in different clusters). Another example is to classify a plurality of objects by showing a few examples such that the rest of the objects are labeled in a similar way. It is an important task with wide applications in various scientific and engineering disciplines.

Recently, there has been special attention given to the graph based approach, *i.e.,* casting a domain specific problem to a general graph representation followed by graph partition. A graph G(V,E) is a mathematical representation of a set of nodes V and edges E. A node $v_i$ is an abstract representation of an entity/object, such as an image, event, audio, car, gene, people, etc. An edge $e_{ij}$ captures the relationship between two nodes, e.g. distance, similarity, affinity, etc. A connected graph can be partitioned into several sub-graphs (known as a graph cut) and the nodes can be grouped into meta-nodes based on the edge weights. Accordingly, the objects represented by the graph nodes are grouped into coherent clusters. Among the related tasks, some examples are image segmentation (grouping pixels into regions), perceptual grouping (linking edges to contours), image and shape organization (classifying a collection of images and contours into groups), multi-object motion segmentation (classifying independently moving rigid objects), and event analysis in video sequence (organizing video frames into events).

There are alternative approaches, such as statistical pattern classification and Bayesian network analysis, to classify a plurality of objects into clusters. These schemes extract features from objects and cast them into high dimensional feature space. The task of classification is then carried out by defining the decision boundaries in the feature space. However, there is a tradeoff between the discrimination power and the computational expense. Feature vectors with larger dimensionality are more discriminative, however they reside in higher dimensional space and require more expensive computations. Even worse, they require sufficient (sometimes formidable) training data to learn the prior statistical distribution, especially in a high dimensional feature space. Instead, a graph-based approach takes the similarity of the feature vectors as graph weights, which are decoupled from feature dimensionality. There are also well-studied and efficient algorithms in graph theory for graph partition, making the graph-based approach very attractive.

Casting a domain specific problem to a graph representation followed by a graph cut has been used in a variety of applications to classify a plurality of objects. For example, WO patent application No. 0173428, "Method and system for clustering data", to R. Shamir and R. Sharan, discloses a method to classify a set of elements, such as genes in biology, by the use of the graph representation (with the similarity of the fingerprints derived from genes) and graph cut.

There is also a rich literature on this topic. Selected published papers listed include: (1) "An optimal graph theoretic approach to data clustering: theory and its application to image segmentation," by Z. Wu and R. Leahy, *IEEE Transactions on Pattern Analysis and Machine Intelligence (TPAMI),* vol. 15, pp.1101-1113, 1993, described a graph-based approach to data analysis with application to image segmentation. (2) "Normalized cuts and image segmentation", by J. Shi and J. Malik, *TPAMI,* vol. 22, pp. 888-905, August 2000, described a new graph cut algorithm (known as the normalized cut) and its application in image segmentation. (3) "Contour and texture analysis for image segmentation", by J. Malik, et al, *International Journal on Computer Vision,* vol. 43, pp.7-27, June 2001, described using two different cues, contour and texture, in still image segmentation. (4) "Self-organization in vision: stochastic clustering for image segmentation, perceptual grouping, and image database organization", by Y. Gdalyahu, et al, *TPAMI,* vol. 23, pp. 1053-1074, October 2001, described a new stochastic graph cut algorithm and its applications for three self-organization tasks. More recently, (5) "Learning segmentation by random walks", *Advances in Neural Information Processing system,* by M. Meila and J. Shi, MIT Press, 2001, described learning the prior model by minimization of the Kullback-Leibler divergence for image segmentation. Most of the prior works used only a single representative cue derived from the objects and primarily focused on the graph cut algorithm, i.e., how to partition a graph into sub-graphs given the graph weights (similarity measures between nodes). The paper by Meila and Shi suggested learning of the prior model for image segmentation. However, it did not disclose the details of the optimization, choice of the distance metrics, and applications other than image segmentation.

While the generic graph partition is of universal interest and importance, the pre-processing step of assigning the graph weights is essential for the success of a specific task. When multiple object cues are available, such as color, texture, time stamp, motion, *etc.,* how to integrate the expressive ones as a composite measure is an issue. Cue integration combines similarity measures from various cues to a composite and normalized measure. A popular choice of cue integration is exponential decay,

$$w_{ij} = \exp(-\sum_k \lambda_k f_{ij}^k),$$

combining pairwise similarity $f_{ij}^k$ from various cues to a single composite measure. The parameters $\{\lambda_k\}_{k=1}^k$ capture the relative expressiveness of the cues and implicitly encode the domain and task specific prior knowledge. Instead of taking default values, these parameters can be learned from examples, adaptively tuned for a given data set, and applied to similar objects.

Intuition suggests better results could be obtained by integrating multiple object cues. However, deriving object similarity from various cues is a challenging task. The cues may have different characteristics, such as type, scale, and numerical range. They could be redundant or inconsistent. Furthermore, similarity between a plurality of objects is always a relative measure within a context. There are no universal descriptions which are most expressive for any object sets in every foreseeable task. There is thus an obvious need for, and it would be highly advantageous to have, an adaptation scheme to tune the consistent cues for a specific data set.

The present invention is directed to overcoming one or more of the problems set forth above. Briefly summarized, according to one aspect of the present invention, the invention resides in a method for multiple cue integration based on a plurality of objects, comprising the steps of: (a) deriving an ideal transition graph and ideal transition probability matrix from examples with known membership from the plurality of objects; (b) deriving a relationship of the plurality of objects as distance graphs and distance matrices based on a plurality of object cues; (c) integrating the distance graphs and distance matrices as a single transition probability graph and transition matrix by exponential decay; and (d) optimizing the integration of the distance graphs and distance matrices in step (c) by minimizing a distance between the ideal transition probability matrix and the transition matrix derived from cue integration in step (c), wherein the integration implicitly captures prior knowledge of cue expressiveness and effectiveness.

Accordingly, the need is met in this invention by an adaptation scheme for multiple cue integration to integrate multiple graphs from various cues to a single graph, such that the distance between the ideal transition probability matrix to the one derived from cue integration is optimized. Domain and task specific knowledge is explored to facilitate the generic pattern classification task.

The invention is of particular advantage in a number of situations. For instance, the method may be (a) applied to content-based image description for effective image classification; (b) used to classify a plurality of objects by integration of multiple object cues as a transition graph followed by a spectral graph partition; (c) used in photo albuming applications to sort pictures into albums; (d) used for a photo finishing application utilizing image enhancement algorithms wherein parameters of the image enhancement algorithms are adaptive to categories of the input pictures. These uses are not intended as a limitation, and the method according to the invention may be used in a variety of other circumstances that would be obvious and well-understood by one of skill in this art.

These and other aspects, objects, features and advantages of the present invention will be more clearly understood and appreciated from a review of the following detailed description of the preferred embodiments and appended claims, and by reference to the accompanying drawings.

Fig. 1 is a perspective diagram of a computer system for implementing the present invention.

Fig. 2 outlines the adaptation scheme for multiple cue integration.

Fig. 3 illustrates the generation of a distance graph and distance matrix.

Fig. 4 shows the details to integrate the distance graphs and matrices from multiple cues as a single transition graph and a transition probability matrix.

Fig. 5 outlines the optimization step to minimize the distance between the ideal transition matrix and the one derived from cue integration.

Fig. 6 shows the details of the optimization.

Fig. 7 shows the 25 test images (from the categories of sunset, rose, face, texture and fingerprint) used for the example of content-based image description.

Figs. 8A — 8D depict the distance between $\mathbf{P}^*$ and $\mathbf{P}$ (x axis: color correlogram, y axis: wavelet, z axis: distance) by different distance measures: (a) Frobenius distance; (b) Kullback-Leibler divergence; (c) Jeffrey divergence; (d) Cross entropy.

Figs. 9A and 9B show (a) the ideal transition probability matrix $\mathbf{P}^*$ and (b) its top 3 dominant eigenvectors.

Figs. 10A and 10B show (a) the optimal transition probability matrix $\mathbf{P}$ by Frobenius distance and (b) the top 3 dominant eigenvectors.

Figs. 11 A and 11B show (a) the optimal transition probability matrix $\mathbf{P}$ by Kullback-Leibler divergence and (b) the top 3 dominant eigenvectors.

Figs. 12A and 12B show (a) the optimal transition probability matrix $\mathbf{P}$ by Jeffrey divergence and (b) the top 3 dominant eigenvectors.

Figs. 13A and 13B show (a) the optimal transition probability matrix **P** by cross entropy and (b) the top 3 dominant eigenvectors.

In the following description, a preferred embodiment of the present invention will be described in terms that would ordinarily be implemented as a software program. Those skilled in the art will readily recognize that the equivalent of such software may also be constructed in hardware. Because image manipulation algorithms and systems are well known, the present description will be directed in particular to algorithms and systems forming part of, or cooperating more directly with, the system and method in accordance with the present invention. Other aspects of such algorithms and systems, and hardware and/or software for producing and otherwise processing the image signals involved therewith, not specifically shown or described herein, may be selected from such systems, algorithms, components and elements known in the art. Given the system as described according to the invention in the following materials, software not specifically shown, suggested or described herein that is useful for implementation of the invention is conventional and within the ordinary skill in such arts.

Still further, as used herein, the computer program may be stored in a computer readable storage medium, which may comprise, for example; magnetic storage media such as a magnetic disk (such as a hard drive or a floppy disk) or magnetic tape; optical storage media such as an optical disc, optical tape, or machine readable bar code; solid state electronic storage devices such as random access memory (RAM), or read only memory (ROM); or any other physical device or medium employed to store a computer program.

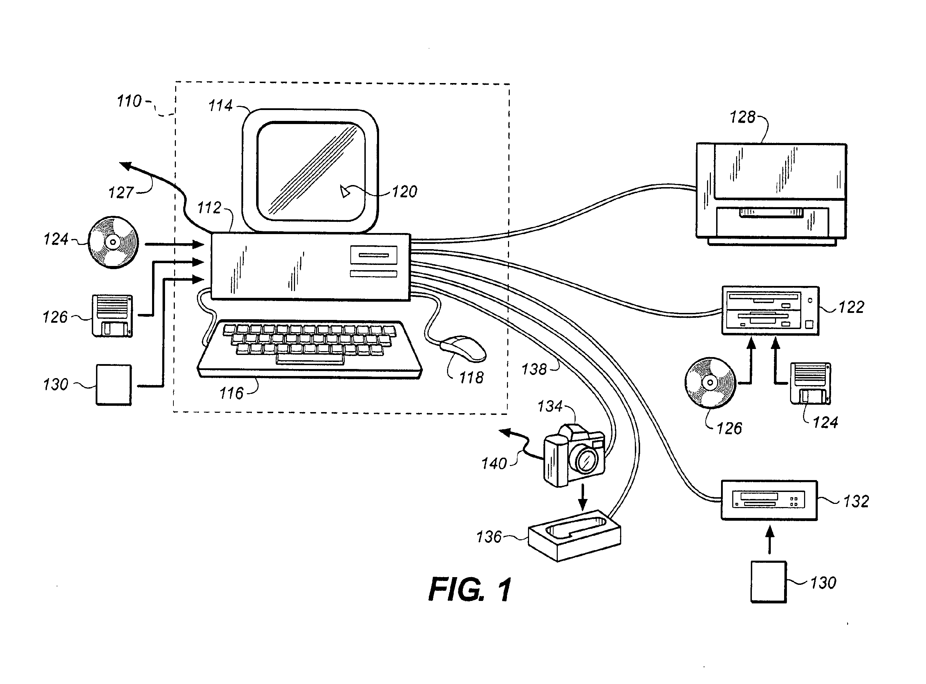

Referring to Fig. 1, there is illustrated a computer system 110 for implementing the present invention. Although the computer system 110 is shown for the purpose of illustrating a preferred embodiment, the present invention is not limited to the computer system 110 shown, but may be used on any electronic processing system such as found in home computers, kiosks, retail or wholesale photofinishing, or any other system for the processing of digital images. The computer system 110 includes a microprocessor-based unit 112 for receiving and processing software programs and for performing other processing functions. A display 114 is electrically connected to the microprocessor-based unit 112 for displaying user-related information associated with the software, e.g., by means of a graphical user interface. A keyboard 116 is also connected to the microprocessor based unit 112 for permitting a user to input information to the software. As an alternative to using the keyboard 116 for input, a mouse 118 may be used for moving a selector 120 on the display 114 and for selecting an item on which the selector 120 overlays, as is well known in the art.

A compact disk-read only memory (CD-ROM) 124, which typically includes software programs, is inserted into the microprocessor based unit for providing a means of inputting the software programs and other information to the microprocessor based unit 112. In addition, a floppy disk 126 may also include a software program, and is inserted into the microprocessor-based unit 112 for inputting the software program. The compact disk-read only memory (CD-ROM) 124 or the floppy disk 126 may alternatively be inserted into externally located disk drive unit 122 which is connected to the microprocessor-based unit 112. Still further, the microprocessor-based unit 112 may be programmed, as is well known in the art, for storing the software program internally. The microprocessor-based unit 112 may also have a network connection 127, such as a telephone line, to an external network, such as a local area network or the Internet. A printer 128 may also be connected to the microprocessor-based unit 112 for printing a hardcopy of the output from the computer system 110.

Images may also be displayed on the display 114 via a personal computer card (PC card) 130, such as, as it was formerly known, a PCMCIA card (based on the specifications of the Personal Computer Memory Card International Association) which contains digitized images electronically embodied in the card 130. The PC card 130 is ultimately inserted into the microprocessor based unit 112 for permitting visual display of the image on the display 114. Alternatively, the PC card 130 can be inserted into an externally located PC card reader 132 connected to the microprocessor-based unit 112. Images may also be input via the compact disk 124, the floppy disk 126, or the network connection 127. Any images stored in the PC card 130, the floppy disk 126 or the compact disk 124, or input through the network connection 127, may have been obtained from a variety of sources, such as a digital camera (134) or a scanner (not shown). Images may also be input directly from the digital camera 134 via a camera docking port 136 connected to the microprocessor-based unit 112 or directly from the digital camera 134 via a cable connection 138 to the microprocessor-based unit 112 or via a wireless connection 140 to the microprocessor-based unit 112.

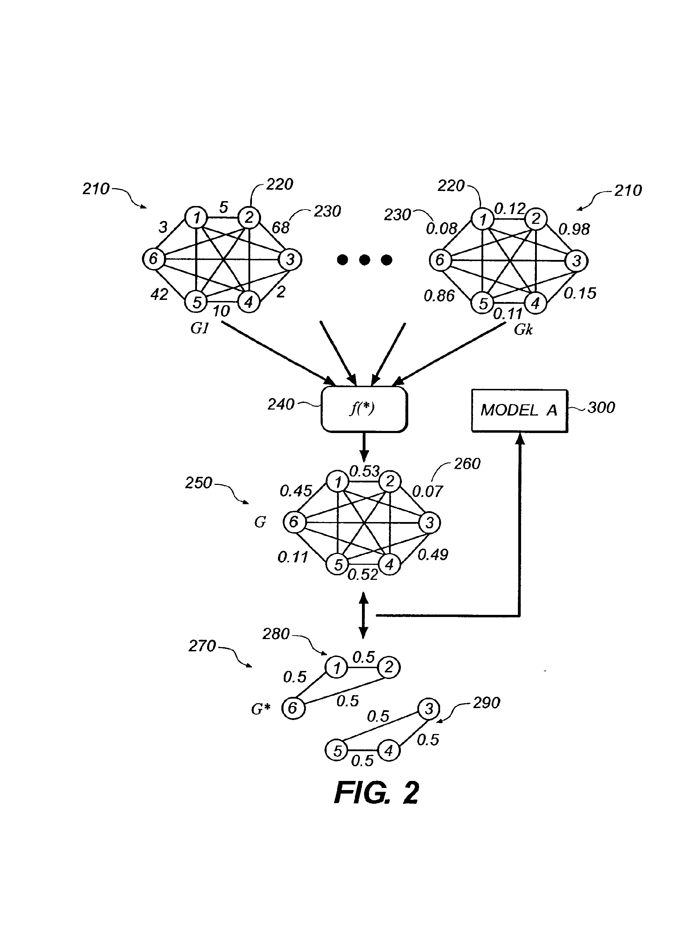

Turning now to Fig. 2, the method of the present invention will be outlined. Fig. 2 illustrates one embodiment of the adaptation method for multiple cue integration. A number of distance graphs 210 and the corresponding distance matrices are derived from a variety of cues of the same set of objects. The graphs are integrated as a single transition graph 250 by cue integration, which is partitioned into sub-graphs for classification purpose. When the cluster membership of some examples is also available, the examples and their relationship can be modeled as an ideal transition graph 270. By minimizing the distance between the graphs of 250 and 270, the underlying prior knowledge used to classify the examples can be inferred and used to tune the system model 300, which in turn can be used for better classification for the rest of the objects.

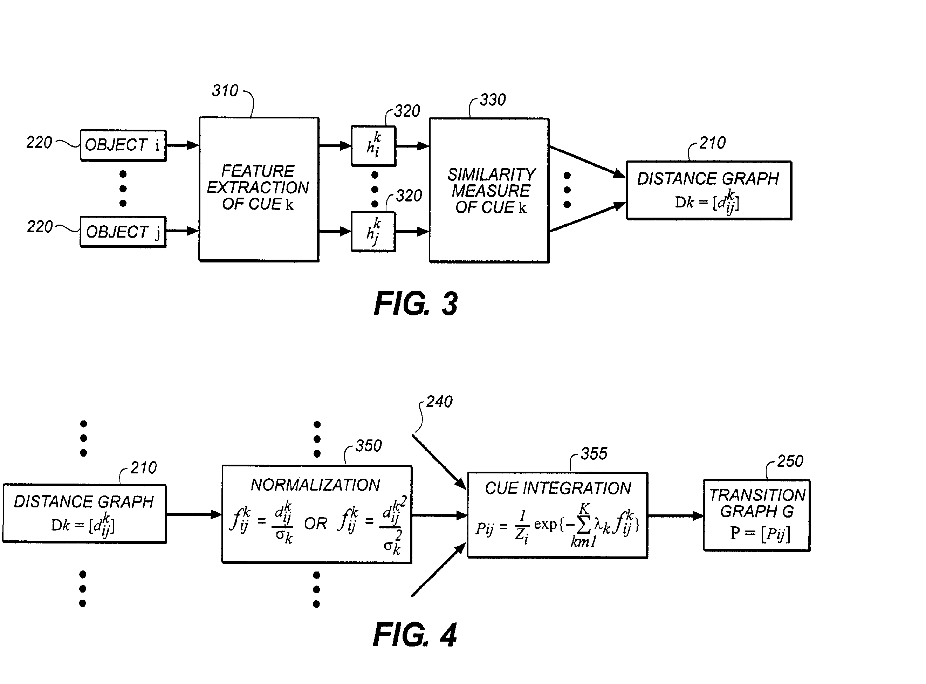

In Fig. 2, six objects and their relationship are modeled as a number of graphs, one per object cue (e.g., a respective cue representing color, shape, height, time, speed, price and so on). The hierarchical graph is a very flexible representation, as a node 220 can contain a single or multiple objects and a pairwise relationship 230 can be derived and evaluated. The same relationship can also be represented by a matrix with element (i,j) indicating the relation between object i and object j. The weights 230 in the distance graphs indicate the distance/dissimilarity between two objects. Similar objects have small weights. For example, object 2 is more similar to object 1 than object 3, with weights 5 and 68 from the first cue and weights 0.12 and 0.98 from the k-th cue. For K different cues, a total of K distance graphs and distance matrices can be derived. They are integrated together in 240 as a single transition graph and transition probability matrix 250 with the cue emphasis dictated by model 300. In a transition graph, the edge weight 260 actually becomes the probability of transition from one node to the other. The goal of this invention is to find the optimal model 300 such that the structure of the transition graph and transition probability matrix is simple and unique, giving the following generic classifier a high chance to succeed. The modules in Fig. 2 will be discussed in detail in Fig. 3 to Fig. 6.

Fig. 3 shows how to construct a distance graph and distance matrix 210 from a set of objects 220 and their relationship. The object is an abstract representation here depending on the applications domain. For example, the objects can be people if the task is classification of those people showing up in a meeting. They can be photos if the task is to put the photos into an album. Module 310 extracts the unique features (fingerprint) from the objects as cue description 320. Every object has a number of aspects, such as age, height, and sex for people, and color and, texture for image. Obviously, the same set of objects can be classified differently depending on the choice and emphasis of these aspects. Content description 320 $h_i^k$ is the description of the k-th cue of object i and is usually represented as a vector of numbers. Similarity comparison of the content descriptions is carried out in 330. The distance/dissimilarity between the objects for cue k becomes the edge weights of the distance graph 210 and the matrix element $d_{ij}^k$. For the same pair of objects, $d_{ij}^k$ from different cues k=1,...,K may be redundant or inconsistent. For example, images similar in one cue (color) may turn out to be quite different in other cues (spatial layout).

The details of multiple cue integration 240, from distance graphs and distance matrices 210 to transition graph and transition matrix 250, are shown in Fig. 4. The pairwise distance $d_{ij}^k$ is first normalized in 350 as

$$f_{ij}^k = \frac{d_{ij}^k}{\sigma_k} \quad \text{or} \quad f_{ij}^k = \frac{d_{ij}^{k\,2}}{\sigma_k^2}$$

The local scale factor $\sigma_k$ can be estimated from a statistical test, or chosen as the k-nearest-neighbor of the elements in distance matrix $D^k$. The measures $d_{ij}^k$ from various cues may have quite different numerical ranges, from 0 to infinity. The normalization makes $f_{ij}^k$ fall in similar ranges, avoiding one cue over-dominating the others.

The normalized distance measures $f_{ij}^k$ are then integrated and combined as a single transition probability $p_{ij}$ by exponential decay in 355

$$p_{ij} = \frac{1}{Z_i} \exp\{-\sum_{k=1}^{K} \lambda_k f_{ij}^k\},$$

$$Z_i = \sum_{j=1}^{N} p_{ij} = \sum_{j=1}^{N} \exp\{-\sum_{k=1}^{K} \lambda_k f_{ij}^k\}.$$

$P_{ij}$ is an empirical transition probability from node i to node j and $Z_i$ is the normalization term for node i such that the transition probabilities from node i to the other nodes sum to 1.

The cue integration 240 has Gibbs form. Although other monotonic functions could be used potentially, the exponential decay is supported by psychophysical tests. The weights $\Lambda = \{\lambda_k\}_{k=1}^{K}$ control the relative cue importance/expressiveness. They encode prior knowledge such as what cues are considered to be expressive and discriminative for the given set of objects. In the following we show how to learn model A from examples.

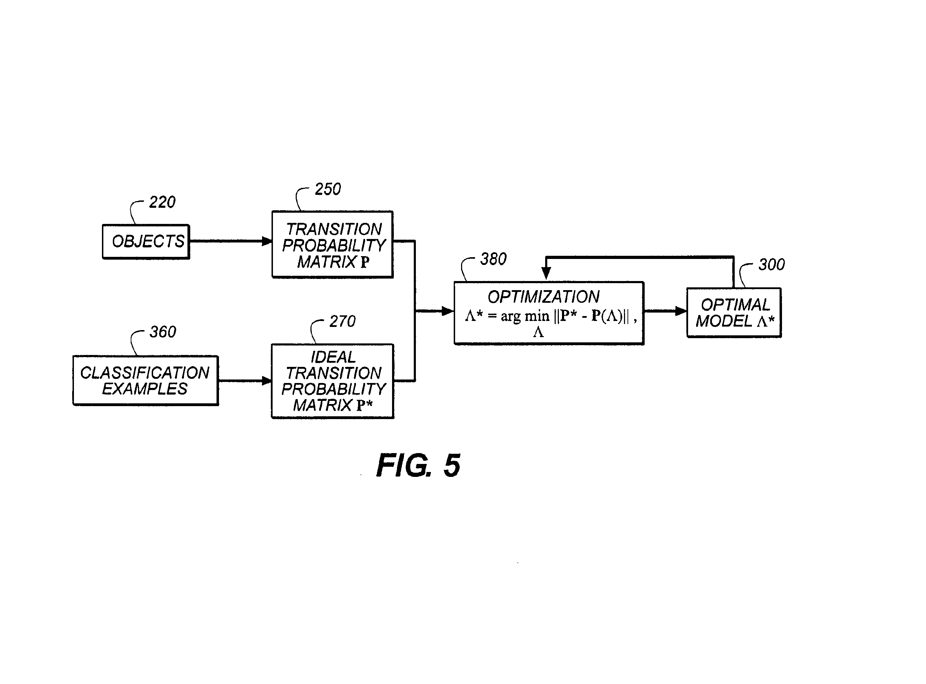

Now turning to Fig. 5, assume we have a number of unsorted objects 220 (with unknown cluster membership) and some classification examples 360 (with known cluster membership). The examples implicitly capture the prior knowledge used to classify them. By finding the optimal model $\Lambda^*$ 300, we hope to classify the unsorted objects 220 in a similar way.

Following the procedures in Fig. 3 and Fig. 4, a transition probability matrix **P** 250 and an ideal transition probability matrix **P\*** can be derived from unsorted objects 220 and example 360, respectively. It can be shown that the ideal transition probability matrix **P\*** is a symmetric block diagonal matrix. The intra-class transition is made equally probable and the inter-class transition is strictly prohibited. The simple structure leads to unique and piecewise constant eigenvectors which can be easily classified, making the corresponding graph partition robust and efficient. In practice, the transition matrix **P** derived from cue integration has complicated structures. It may not be symmetric and may not have unique eigenvectors. The intra-class transition is not equally probable and the inter-class transition probability is not always 0. All these factors make the structure of the dominant eigenvectors complicated and the classification difficult.

The goal then is to find the optimal model $\Lambda^*$ 300 which minimizes the distance between the ideal transition distribution **P\*** and the one derived from cue integration **P**,

$$\Lambda^* = \arg\min_{\Lambda} \|\mathbf{P}^* - \mathbf{P}(\Lambda)\|$$

through optimization 380.

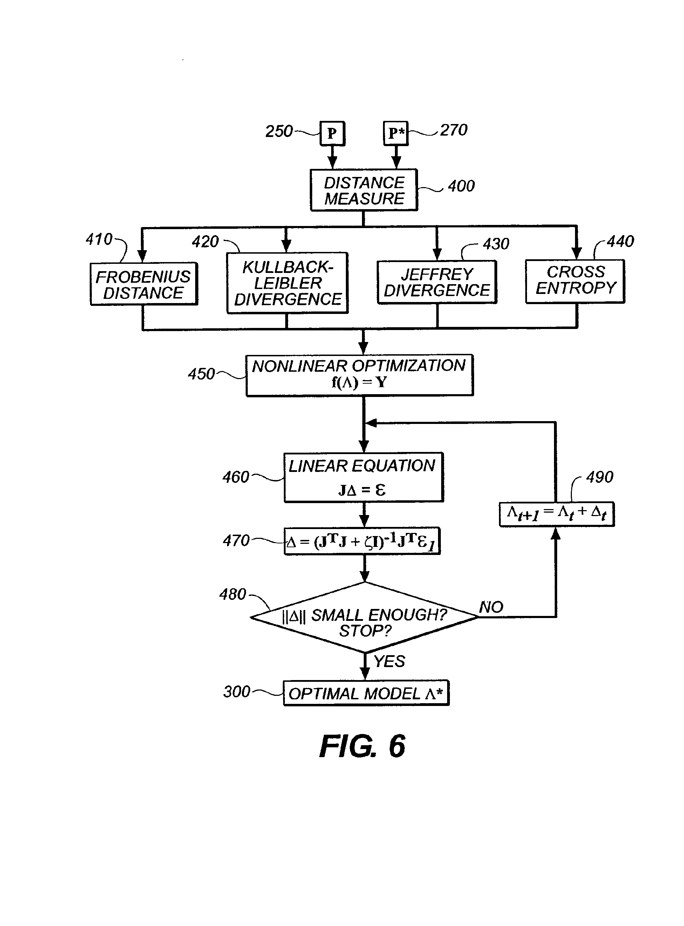

Next turn to Fig. 6 for the details of the optimization. The inputs are the ideal transition distribution **P\*** 270 and the one derived from cue integration **P** 250. The distance of **||P\*-P||** is to be minimized subject to the choice of the distance measure 400. There are different ways to measure the discrepancy between two matrices, such as the Frobenius norm 410, the Kullback-Leibler divergence 420, the Jeffrey divergence 430, and the cross entropy 440. We take the partial derivative of **||P\*-P||** with respect to the parameter $\Lambda$ and set it to zero, yielding a set of nonlinear equation **f**($\Lambda$)**=Y,** with function f mapping the unknown variables $\Lambda$ to the observation **Y**. We then solve **f**($\Lambda$)**=Y** 450 for the optimal solution $\Lambda^*$.

a) The Frobenius norm 410 is a symmetric measure of the distance between two matrices with the same dimension

$$\Lambda^* = \arg\min_{\Lambda} \|\mathbf{P}^* - \mathbf{P}(\Lambda)\|$$

With this choice, the nonlinear equation **f**($\Lambda$)**=Y** has the following explicit form

$$\sum_{ij=1}^{N} p_{ij}(p_{ij} - p_{ij}^*)\left(\sum_{j=1}^{N} p_{ij} f_{ij}^k - f_{ij}^k\right) = 0$$

b) The Kullback-Leibler directed divergence 420 measures the directed discrepancy from one probability distribution to the other,

$$\|\mathbf{P}^* - \mathbf{P}\|_{KL} = \sum_{ij=1}^{N} p_{ij}^* \log p_{ij}^* - \sum_{ij=1}^{N} p_{ij}^* \log p_{ij}.$$

It leads to the following optimization equations

$$\sum_{ij=1}^{N} p_{ij} f_{ij}^k = \sum_{ij=1}^{N} p_{ij}^* f_{ij}^k.$$

c) The Jeffrey divergence 430 is a symmetric measure of two probability distributions:

$$\|\mathbf{P}^* - \mathbf{P}\|_{JF} = \sum_{ij=1}^{N} p_{ij} \log \frac{p_{ij}}{p_{ij}^*} + \sum_{ij=1}^{N} p_{ij}^* \log \frac{p_{ij}^*}{p_{ij}}.$$

When it selected as the distance measure, the nonlinear equation f(A)=Y has the following form

$$-\sum_{i=1}^{N}(\sum_{j=1}^{N} p_{ij} \log \frac{p_{ij}}{p_{ij}^*})(\sum_{j=1}^{N} p_{ij} f_{ij}^k) + \sum_{ij=1}^{N} p_{ij} f_{ij}^k \log \frac{p_{ij}}{p_{ij}^*} + \sum_{ij=1}^{N} p_{ij} f_{ij}^k = \sum_{ij=1}^{N} p_{ij}^* f_{ij}^k$$

d) The cross entropy defined as

$$\|\mathbf{P}^* - \mathbf{P}\|_{ce} = -\sum_{ij=1}^{N} (p_{ij} \log p_{ij}^* + p_{ij}^* \log p_{ij})$$

leads to a different form of the optimization equation

$$\sum_{ij=1}^{N} p_{ij} \log p_{ij}^* (\sum_{j=1}^{N} p_{ij} f_{ij}^k - f_{ij}^k) + \sum_{ij=1}^{N} p_{ij} f_{ij}^k = \sum_{ij=1}^{N} p_{ij}^* f_{ij}^k$$

In the following we present the steps to solve the nonlinear optimization $\mathbf{f}(\Lambda)=\mathbf{Y}$. First the nonlinear equations are linearized around the solution of $\Lambda$ as

$$J\Delta = \varepsilon,$$

where $J = \frac{\partial f}{\partial \Lambda}$ is the Jacobian matrix, $\Delta$ is an adjustment on $\Lambda$, and $\varepsilon = \mathbf{Y} - \mathbf{f}(\Lambda)$ is the approximation error by linearization. The solution to the linear system is iteratively refined as

$$\Lambda_{t+1} = \Lambda_t + \Delta_t.$$

in module 490 where the previous solution is as a starting point for the next iteration. The iteration continues until $\|\Delta_t\|$ is small enough or pre-specified number of iteration has researched. The output of the iteration is the optimal model A* 300, which can be used to classified the rest of the unsorted objects.

We use the Levenberg-Marguardt method for better control of the step size and faster convergence. The basic idea is to adapt the step size of the iterated estimation by switching between Newton iteration for fast convergence and descent approach for decrease of cost function. To this end, the linear solution to $\mathbf{J}\Delta = \varepsilon$ is available as

$$\Delta = (\mathbf{J}^T \mathbf{J} + \zeta \mathbf{I})^{-1} \mathbf{J}^T \varepsilon,$$

where I is an identity matrix. The perturbation term on the diagonal elements $\zeta$ controls the step size, as large $\zeta$ yields small step size. Initially $\zeta$ is set as some small number, *e.g.* $\zeta = 0.001$. After an iteration, if $\Delta_t$ leads to decrease in error, the solution is accepted and $\zeta$ is divided by 10. Otherwise, $\zeta$ is multiplied by 10 to decrease the step size in the next iteration. The procedure usually converges within a few iterations for small and moderate number of cues.

Having presented the details of the adaptation scheme for multiple cue integration, we turn to the specific application of image content description as a preferred embodiment. By changing the physical meaning of the graph nodes, the same approach can be applied to other classification tasks as well.

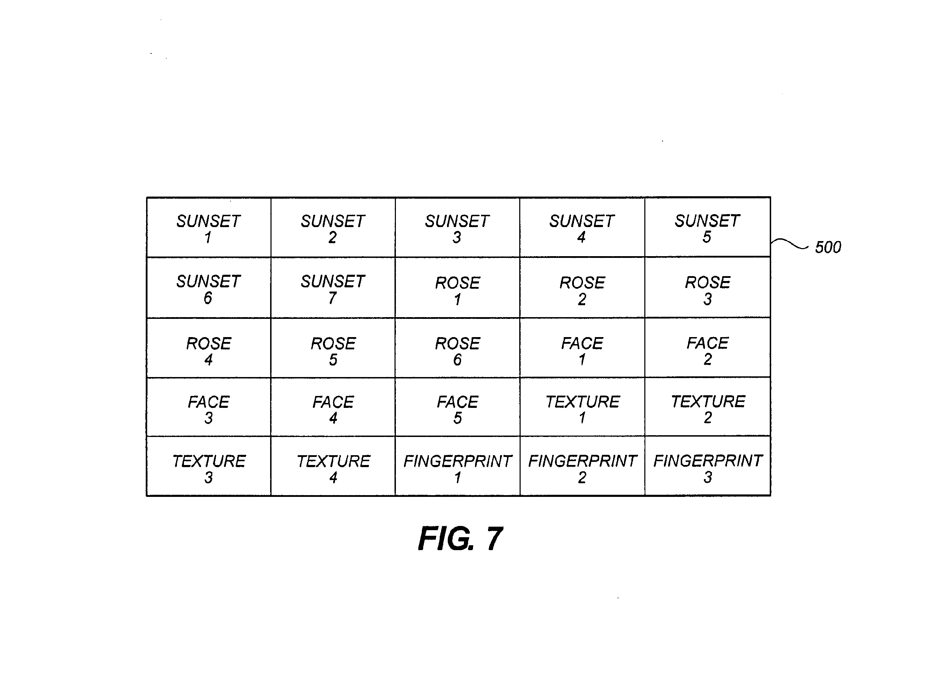

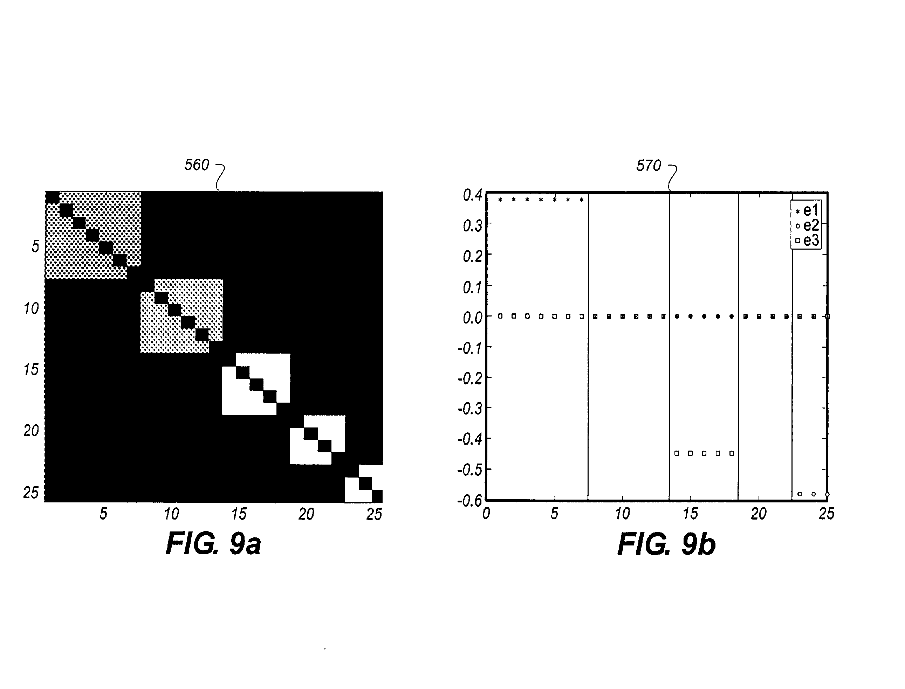

Image classification is intended to classify a set of unorganized images as coherent clusters (e.g. the photo albuming task) based on image content. The issue is how to describe the image content in an efficient and effective way for robust classification. To this end, 25 test images in Fig. 7 are selected from five different categories, sunset, rose, face, texture and fingerprint. 7, 6, 5, 4 and 3 images are chosen from them. The ground truth of the 25 images and their membership of the 5 categories serves as classification examples 360. And an ideal transition probability matrix **P\*** 270 can be derived, as shown in Fig. 9 (560). The matrix has very unique structures, which enable robust and efficient graph partition.

Features of color correlogram and color wavelet moments are chosen as the low-level image content description cues. Therefore there are two distance matrices 210 in Fig. 2, one for color correlogram and the other for color wavelet moments. It has been shown that color correlogram ($\lambda_1$) is effective to capture spatial color distribution and wavelet moments ($\lambda_2$) are good for texture discrimination. Banded auto-correlograms with band distance k=3,5,7 are extracted from uniformly quantized images in YUV color space with 3 bits per channel (module 310 in Fig.3), yielding a feature dimensionality of 1536 ($3*2^{(3+3+3)}$). $\chi^2$ statistics test is carried out for similarity measure (module 330), yielding a 25X25 distance matrix **D$^1$**. For color wavelet moments, we decompose and subsample the images to wavelet pyramid with 3 levels, and collect the mean and the standard deviation of the HL, LH and HH subbands on each level and each color channel (in YUV color space). Each feature has a dimension of 54 (2 moments * 3 subbands * 3 levels * 3 color channels). Each component of the feature vector is further normalized by the standard deviation of that component for the whole image set. Distance of 1-norm is then carried out for similarity measure, yielding the other distance matrix **D$^2$**.

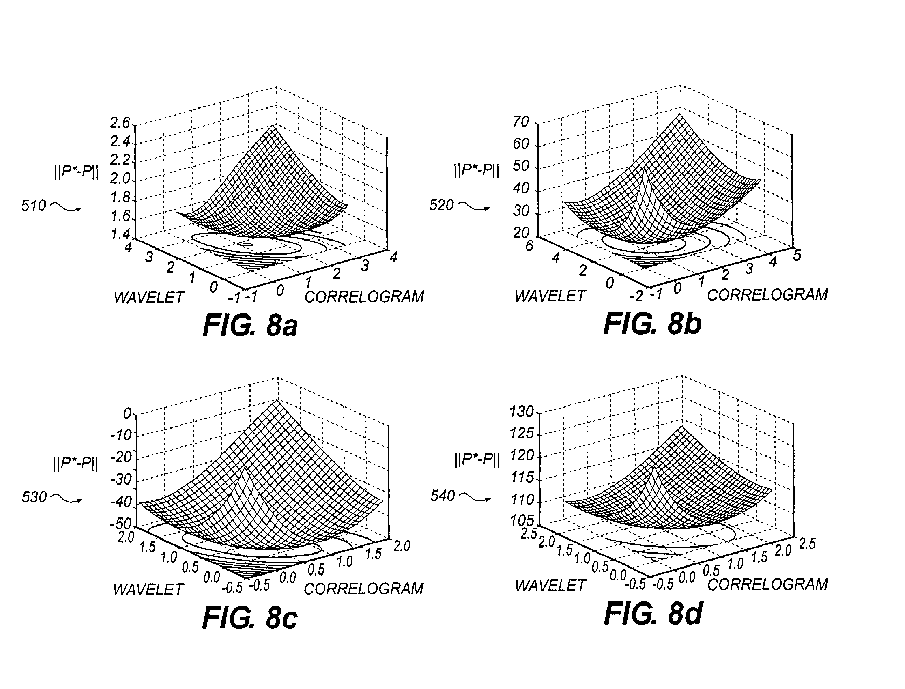

Fig. 8 illustrates the impact of cue integration by tuning the emphasis on the image content description cues. The X and Y axes are $\lambda_1$ (correlogram) and $\lambda_2$ (wavelet). The Z axis is the distance between the ideal transition matrix and the one from cue integration measured by the four distance measures. The optimal model ($\lambda_1^*,\lambda_2^*$) minimizing $\|$**P\*-P**$\|$ is a good starting point for the following graph cut.

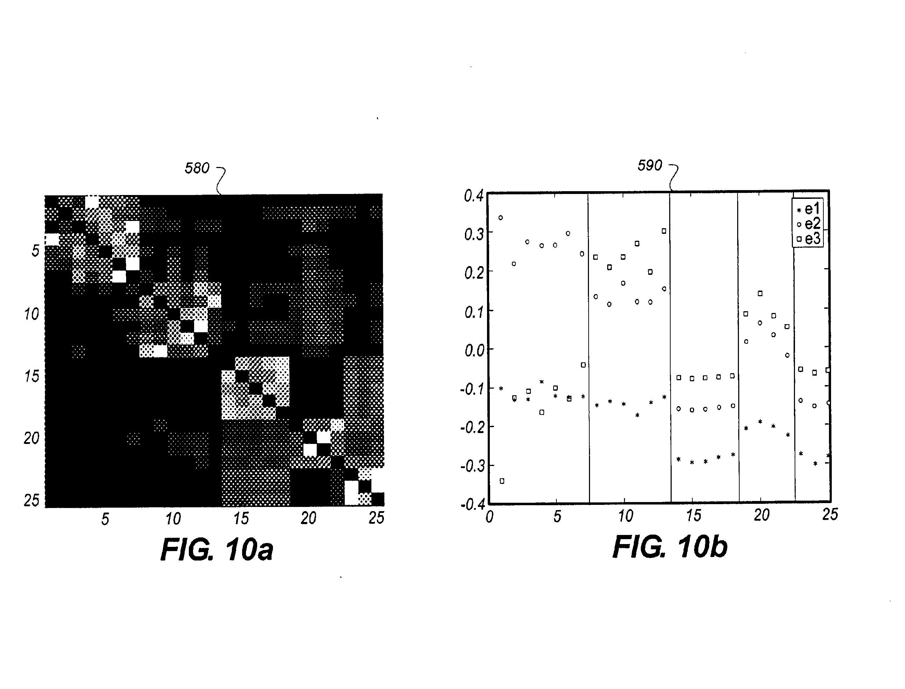

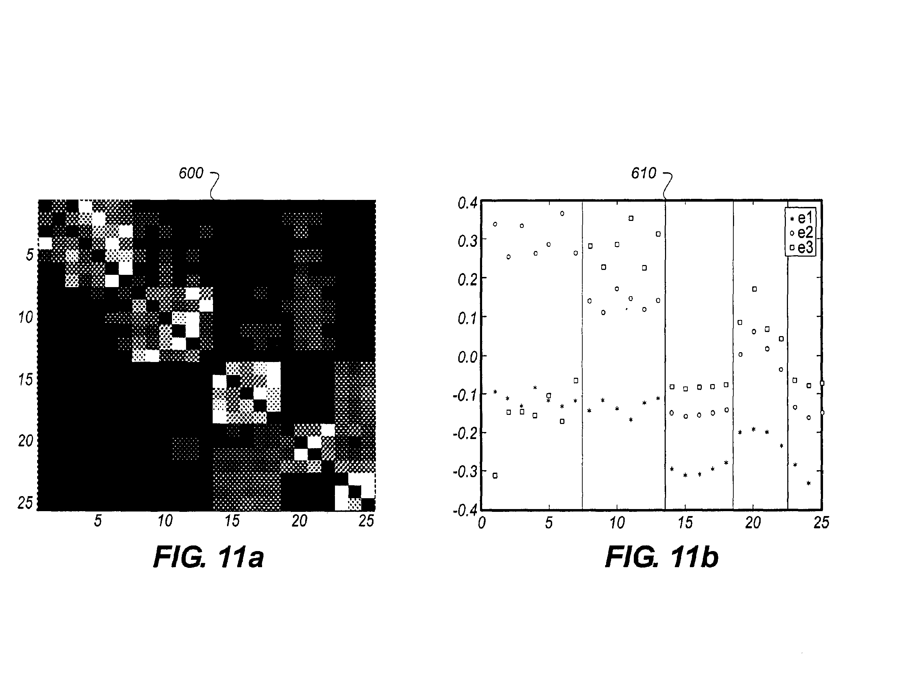

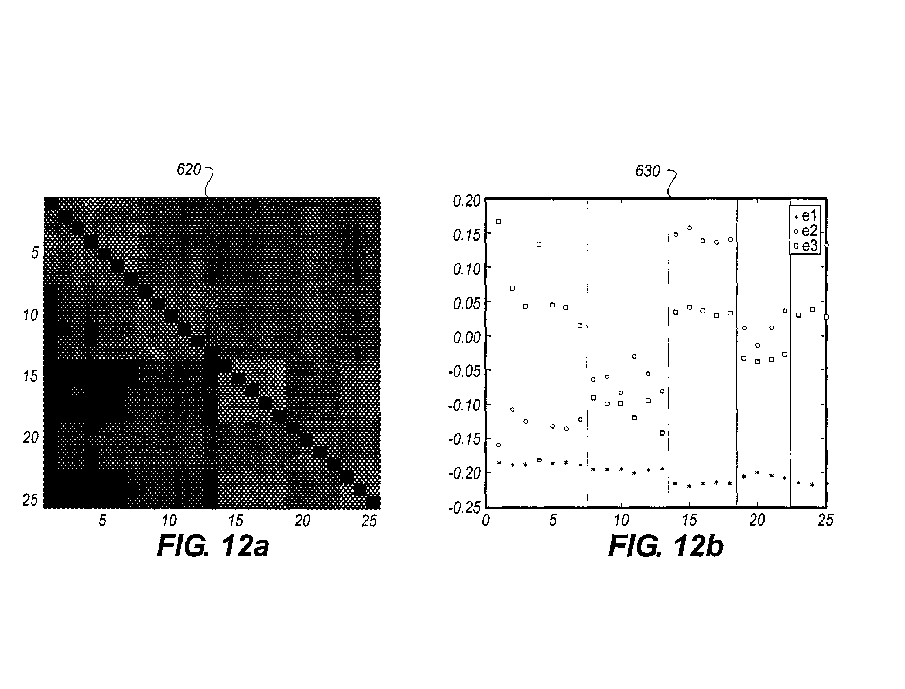

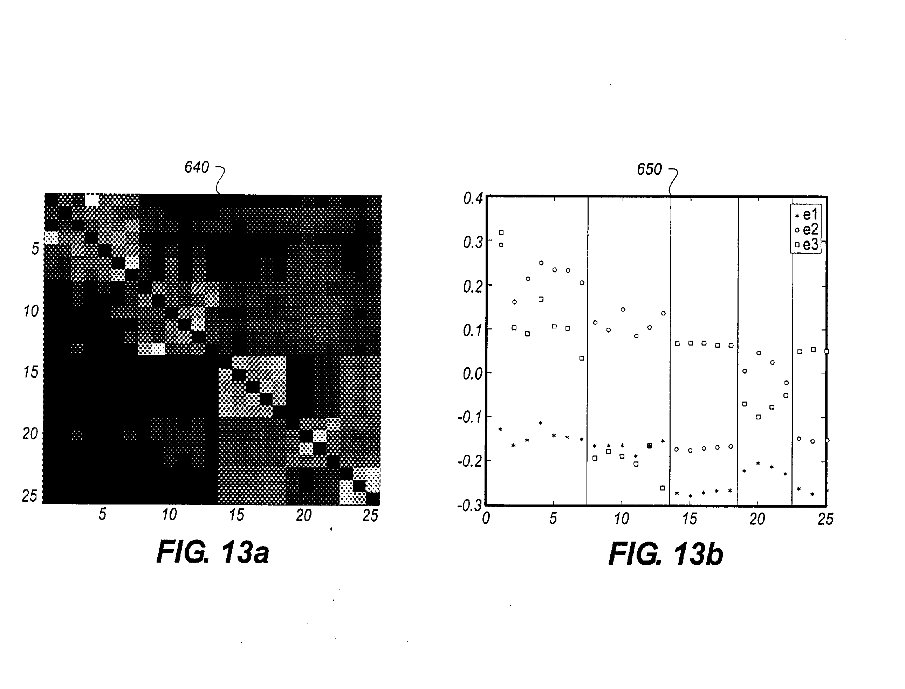

The ideal transition probability matrix **P\*** 560, the optimal transition probability matrices (**P$_f$** 580 by the Frobenius norm, **P$_{kl}$** 600 by the Kullback-Leibler divergence, **P$_{jf}$** 620 by the Jeffrey divergence, **P$_{ce}$** 640 by the cross entropy) and their corresponding top three dominant eigenvectors are shown in Fig. 9 to Fig. 13. In these figures, black, white and gray correspond to $p_{ij}=0$, $p_{ij}=1$, and $0< p_{ij}<1$, respectively. Spectral graph methods use the dominant eigenvectors for graph cut. Therefore eigenvectors with simple and unique structures can be classified more efficiently and robustly. In Fig. 9, it is easy to see the five clusters in the ideal transition matrix. By tuning the system model A, the low-level image descriptions are adapted to the examples shown in the 25 images, and the rest of the images can be classified accordingly.

**Claims**

1. A method for multiple cue integration based on a plurality of objects, said method comprising the steps of:

   (a) deriving an ideal transition graph and ideal transition probability matrix from examples with known membership from the plurality of objects;
   (b) deriving a relationship of the plurality of objects as distance graphs and distance matrices based on a plurality of object cues;
   (c) integrating the distance graphs and distance matrices as a single transition probability graph and transition matrix by exponential decay; and
   (d) optimizing the integration of the distance graphs and distance matrices in step(c) by minimizing a distance between the ideal transition probability matrix and the transition matrix derived from cue integration in step (c), wherein the integration implicitly captures prior knowledge of cue expressiveness and effectiveness.

2. The method of claim 1 wherein the objects are selected from the group comprising images, regions, pixels, edges, time stamps, audio and video clips, genes, and people.

3. The method of claim 1 wherein the distance between the ideal transition probability matrix and the transition matrix derived from cue integration is determined from a Frobenius norm.

4. The method of claim 1 wherein the distance between the ideal transition probability matrix and the transition matrix derived from cue integration is determined from a Kullback-Leibler directed divergence.

5. The method of claim 1 wherein the distance between the ideal transition probability matrix and the transition matrix derived from cue integration is determined from a Jeffrey divergence.

6. The method of claim 1 wherein the distance between the ideal transition probability matrix and the transition matrix derived from cue integration is determined from a cross entropy.

7. The method of claim 1 wherein the optimization in step (d) is solved by an iterative scheme.

8. The method of claim 7 wherein the iterative scheme is a Levenberg-Marguardt method.

9. The method of claim 1 wherein the method is applied to content-based image description for effective image classification.

10. The method of claim 1 wherein the method is used to classify a plurality of objects by integration of multiple object cues as a transition graph followed by a spectral graph partition.

11. The method of claim 1 wherein the method is used in photo albuming applications to sort pictures into albums.

12. The method of claim 1 wherein the method is used for a photo finishing application utilizing image enhancement algorithms wherein parameters of the image enhancement algorithms are adaptive to categories of the input pictures.

**FIG. 1**

**FIG. 2**

FIG. 3

Blocks:
- OBJECT i (220)
- OBJECT j (220)
- FEATURE EXTRACTION OF CUE k (310)
- $h_i^k$ (320)
- $h_j^k$ (320)
- SIMILARITY MEASURE OF CUE k (330)
- DISTANCE GRAPH $Dk = [d_{ij}^k]$ (210)

FIG. 4

Blocks:
- DISTANCE GRAPH $Dk = [d_{ij}^k]$ (210)
- NORMALIZATION $f_{ij}^k = \dfrac{d_{ij}^k}{\sigma_k}$ OR $f_{ij}^k = \dfrac{d_{ij}^{k2}}{\sigma_k^2}$ (350)
- CUE INTEGRATION $P_{ij} = \dfrac{1}{Z_i} \exp\{-\sum_{km1}^{K} \lambda_k f_{ij}^k\}$ (355) (240)
- TRANSITION GRAPH G $P = [P_{ij}]$ (250)

EP 1 418 507 A2

**220**

OBJECTS

**250**

TRANSITION
PROBABILITY
MATRIX **P**

**360**

CLASSIFICATION
EXAMPLES

**270**

IDEAL
TRANSITION
PROBABILITY
MATRIX **P***

**380**

OPTIMIZATION
$\Lambda^* = \arg \min \|P^* - P(\Lambda)\|$,
$\Lambda$

**300**

OPTIMAL
MODEL $\Lambda^*$

**FIG. 5**

*250* — P     P* — *270*

↓     ↓

DISTANCE MEASURE — *400*

*410*    *420*    *430*    *440*

FROBENIUS DISTANCE    KULLBACK-LEIBLER DIVERGENCE    JEFFREY DIVERGENCE    CROSS ENTROPY

*450* — NONLINEAR OPTIMIZATION $f(\Lambda) = \mathbf{Y}$

*460* — LINEAR EQUATION $\mathbf{J}\Delta = \varepsilon$

$490$ — $\Lambda_{t+1} = \Lambda_t + \Delta_t$

*470* — $\Delta = (\mathbf{J^T J} + \zeta \mathbf{I})^{-1}\mathbf{J^T}\varepsilon_1$

*480* — $\|\Delta\|$ SMALL ENOUGH? STOP?    NO

YES

*300* — OPTIMAL MODEL $\Lambda^*$

**FIG. 6**

EP 1 418 507 A2

| SUNSET 1 | SUNSET 2 | SUNSET 3 | SUNSET 4 | SUNSET 5 |
|---|---|---|---|---|
| SUNSET 6 | SUNSET 7 | ROSE 1 | ROSE 2 | ROSE 3 |
| ROSE 4 | ROSE 5 | ROSE 6 | FACE 1 | FACE 2 |
| FACE 3 | FACE 4 | FACE 5 | TEXTURE 1 | TEXTURE 2 |
| TEXTURE 3 | TEXTURE 4 | FINGERPRINT 1 | FINGERPRINT 2 | FINGERPRINT 3 |

500

**FIG. 7**

**FIG. 8a**

**FIG. 8b**

**FIG. 8c**

**FIG. 8d**

EP 1 418 507 A2

**FIG. 9a**

**FIG. 9b**

580

FIG. 10a

590

FIG. 10b

EP 1 418 507 A2

**FIG. 11a**

**FIG. 11b**

EP 1 418 507 A2

**FIG. 12a**

**FIG. 12b**

EP 1 418 507 A2

**FIG. 13a**

**FIG. 13b**